(19) Europäisches Patentamt

European Patent Office

Office européen des brevets

(11) Veröffentlichungsnummer: **0 287 792 B1**

(12) **EUROPÄISCHE PATENTSCHRIFT**

(45) Veröffentlichungstag der Patentschrift: **05.08.92**

(21) Anmeldenummer: **88103592.7**

(22) Anmeldetag: **08.03.88**

(51) Int. Cl.⁵: **B60B 17/00**

(54) **Gummigefedertes Schienenrad.**

(30) Priorität: **18.04.87 DE 3713270**

(43) Veröffentlichungstag der Anmeldung:
**26.10.88 Patentblatt 88/43**

(45) Bekanntmachung des Hinweises auf die
Patenterteilung:
**05.08.92 Patentblatt 92/32**

(84) Benannte Vertragsstaaten:
**CH LI NL**

(56) Entgegenhaltungen:
**DE-A- 1 455 094**
**DE-A- 2 504 879**
**US-A- 1 693 576**
**US-A- 1 985 144**

**PATENT ABSTRACTS OF JAPAN, Band 9, Nr. 223 (M-411)[1946], 10. September 1985; & JP-A-60 80 906 (SUMITOMO KINZOKU KOGYO K.K.) 08-05-1985**

(73) Patentinhaber: **VEREINIGTE SCHMIEDEWERKE GMBH**
**Alleestrasse 70**
**W-4630 Bochum(DE)**

(72) Erfinder: **Rittinghaus, Rolf, Dipl.-Ing.**
**Eichenkamp 1**
**W-4507 Hasbergen-Gaste(DE)**

(74) Vertreter: **Cohausz & Florack Patentanwälte**
**Postfach 14 01 61 Schumannstrasse 97**
**W-4000 Düsseldorf 1(DE)**

**Beschreibung**

Die Erfindung bezieht sich auf ein gummigefedertes Schienenrad mit je einer durch seitliche Schultern gebildeten Ringnut des Radreifens und der Radfelge und mehreren in dem von den Ringnuten begrenzten Ringraum mit Abstand zueinander eingebetteten, vorgespannten Gummikörpern und mit an einer Radseite im Bereich der Schultern unter Belassung eines Ringspaltes einander überlappenden radialen Ansätzen, wobei in dem von den Ansätzen gebildeten Ringspalt ein unter axialer Vorspannung stehender Gummikörper angeordnet ist.

Bei einem bekannten Rad dieser Art, allerdings ohne im Ringspalt angeordnetem Gummikörper (DE-AS 11 56 837) wird der Radreifen allein durch in in dem Ringraum zwischen Radreifen und Radfelge eingebetteten unter Vorspannung stehenden Gummikörpern auf der Radfelge gehalten. Dieses Rad hat sich seit seiner Einführung in der Praxis bewährt. Es genügt im allgemeinen sämtlichen normalen Betriebsbeanspruchungen bei Einsatz im praktischen Betrieb.

Bei den heutigen von den Bahnverwaltungen geforderten höheren Fahrgeschwindigkeiten reichen jedoch die Eigenschaften eines derartigen gummigefederten Rades, insbesondere bei schnellen Kurvenfahrten, nicht aus. Zwar genügt die radiale Einfederung allen Betriebsbeanspruchungen, es kommt jedoch, insbesondere bei schnellen Kurvenfahrten, zu einer nicht mehr zulässigen axialen Auslenkung des Radreifens. Das bedeutet jedoch, daß nach den von den Verkehrsbetrieben neu erarbeiteten Spurführungsrichtlinien die Entgleisungssicherheit nicht mehr gewährleistet ist.

Dieser Nachteil konnte auch - wie praktische Versuche ergeben haben - nicht dadurch behoben werden, daß die seitlichen Schultern des Radreifens und der Radfelge einander überlappende Ansätze aufweisen. Dadurch ist zwar eine Sicherheit gegen allzu starke axiale Verschiebung des Radreifens gegeben, bei schnellen Kurvenfahrten jedoch schlagen die sich überlappenden Ansätze gegeneinander, so daß ein metallischer Kontakt zwischen den Ansätzen eintritt, der einerseits eine unerwünschte Geräuschbildung hervorruft, andererseits aber auch dazu führt, daß die sich überlappenden Ansätze verschleißen und sogar brechen.

Bei einem bekannten Rad der eingangs genannten Art (US-PS 1,985,144) wird der metallische Kontakt der sich überlappenden Ansätze durch den zwischen den Ansätzen angeordneten unter axialer Vorspannung stehenden Gummikörper verhindert. Bei diesem bekannten Rad ist der radiale Ansatz des Radreifens zwischen zwei Gummikörpern zwischen einem radialen Ansatz der Felge und einer äußeren Kappe mittels eines die Felge durchsetzenden Schraubenbolzens axial eingespannt. Durch diese Einspannung wird der Radreifen auf der Felge axial festgelegt. Damit bei dieser Einspannung der Radreifen radial abfedern kann, weist der Ansatz des Radreifens Bohrungen auf, in denen auf den Schraubenbolzen angeordnete Gummibuchsen sitzen. Zur Beeinflussung der Lage und der Vorspannung der im von den Nuten gebildeten Ringraum angeordneten Gummieinlage sind seitlich auf die Gummieinlage wirkende Spannbolzen vorgesehen.

Ausgehend von diesem Stand der Technik ist es Aufgabe der Erfindung, ein gummigefedertes Schienenrad der eingangs genannten Art zu schaffen, daß bei einfachem Aufbau eine den heutigen Spurführungsvorschriften der Verkehrsbetriebe und Bahnverwaltungen genügende axiale Steifigkeit des Rades gegeben ist.

Gelöst wird diese Aufgabe dadurch, daß der eine Ansatz von der radäußeren Schulter des Radreifens nach außen versetzt und radial zur Felge weisend die den anderen Ansatz bildende Schulter der Radfelge überlappt, und daß ein axialer Ringkragen radial gegenüber der Schulter zur Radachse hin versetzt angeordnet ist, auf dem der Gummikörper abgestützt ist, dessen axiale Vorspannung im Gleichgewicht mit der axialen Schubspannung in den zwischen dem Radreifen und der Radfelge unter Vorspannung eingebetteten Gummikörpern steht.

Bei der Erfindung läßt sich die für die axiale Vorspannung des Gummikörpers benötigte axiale Kraft aus der axialen Schubspannung der in der Ringnut angeordneten Gummikörper problemlos ableiten. Da die in der Ringnut angeordneten Gummikörper eine verhältnismäßig kleine radiale Höhe bei einer großen Querschnittsfläche in tangentialer und axialer Richtung haben, verkraften die Gummikörper verhältnismäßig hohe Kräfte als Gegenkräfte für die gewünschte axiale Vorspannung des seitlich am Rad angeordneten Gummikörpers. In Abhängigkeit der im praktischen Betrieb zu erwartenden Belastungen lassen sich so gezielt Vorspannungen erzeugen, die ein seitliches Wandern des Radreifens, insbesondere bei schnellen Kurvenfahrten, so stark reduzieren, daß die Vorschriften der Spurführungsrichtlinien voll erfüllt werden.

Von der Einstellung der axialen Vorspannung des Gummikörpers bleibt die gewünschte radiale Einfederung des Radreifens, die über die radiale Vorspannung der den Radreifen mit der Radfelge verbindenden Gummikörper einstellbar ist, praktisch unberührt, da die beiden Kraftrichtungen keine gemeinsamen Komponenten haben.

Vorzugsweise sind die einander überlappenden Ansätze an der Radaußenseite vorgesehen. Bei einer solchen Anordnung der Ansätze besteht keine Gefahr, daß es, beispielsweise beim Befahren von Schienen und Kreuzungen, zu Kollisionen mit Radlenkern kommt. Darüber hinaus ergibt sich bei dieser Anordnung eine günstigere geometrische Anordnung bezüglich der unter radialer Vorspannung stehenden Gummikörper in bezug auf den Kraftangriffspunkt der hauptsächlich auf das Rad einwirkenden Kräfte.

Für die Vorspannung des Gummikörpers sind verschiedene Kriterien, wie die Geometrie und die Auswahl des Gummimaterials maßgebend. Als günstig hat sich herausgestellt, wenn die axiale Breite des Gummikörpers etwa 1/3 bis 1/10 der axialen Breite der zwischen dem Radreifen und der Radfelge eingebetteten Gummikörper ist. Die radiale Dicke des eingespannten Gummikörpers sollte etwa 1/2 bis 1/1 der radialen Dicke der anderen Gummikörper sein.

Der Gummikörper kann entweder aus mehreren mit Abstand zueinander angeordneten Gummiklötzen oder aus einem geschlossenen Gummiring bestehen. Im Falle von Gummiklötzen sollte deren Länge in Radumfangsrichtung in etwa der Länge der zwischen dem Radreifen und der Radfelge eingebetteten Gummikörper entsprechen. Vorzugsweise sind dabei die Gummiklötze derart angeordnet, daß sie die Lücken zwischen den Gummikörpern überdecken. Die Länge der Gummiklötze in Radumfangsrichtung kann allerdings auch so groß gewählt werden, daß jeweils ein Gummiklotz mehrere Lücken zwischen den anderen Gummikörpern überdeckt.

Bei einer besonderen Ausgestaltung des Schienenrades ist eine Zweiteiligkeit des Radreifenkörpers vorgesehen. Insbesondere ist dabei der die Gummikörper in der von den seitlichen Schultern begrenzten Ringnut aufnehmende und den Ansatz aufweisende innerere Teil des Radreifenkörpers ein separater Ring, auf den ein den Laufkranz und den Spurkranz bildender Verschleißreifen befestigt ist. Der Ring zur Radmittenebene hin weist einen radial nach außen weisenden umlaufenden Flansch auf, gegen den der Verschleißreifen mit einem radial nach innen weisenden umlaufenden Flansch über Schraubverbindungen verspannt ist. Zusätzlich zu den bereits geschilderten vorteilhaften Federungseigenschaften des Rades ist damit die Möglichkeit gegeben, einen verschlissenen Radreifen in einfacher Weise auszuwechseln. Bei innen liegenden Radlagern ist es bei dieser Konstruktion möglich, den Radreifen direkt am Fahrzeug - ähnlich dem Wechsel eines Autoreifens - auszutauschen.

Im folgenden wird die Erfindung anhand von Figuren näher erläutert. Es zeigen:

Fig. 1     einen Querschnitt durch ein erfindungsgemäßes Rad

Fig. 2     eine Seitenansicht nach Fig. 1 (Schnittlinie I-I)

Fig. 3     eine Ausgestaltung der in Fig. 1 dargestellten Konstruktion

Fig. 4     einen Querschnitt durch ein erfindungsgemäßes Rad, bei dem der Verschleißteil des Radreifens separat mit dem Innenteil des Radreifens verspannt ist.

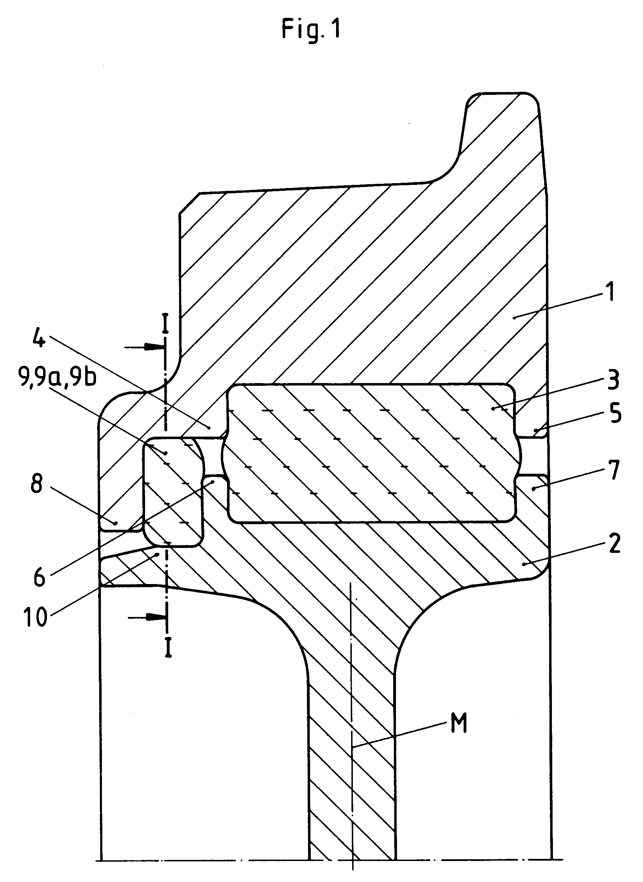

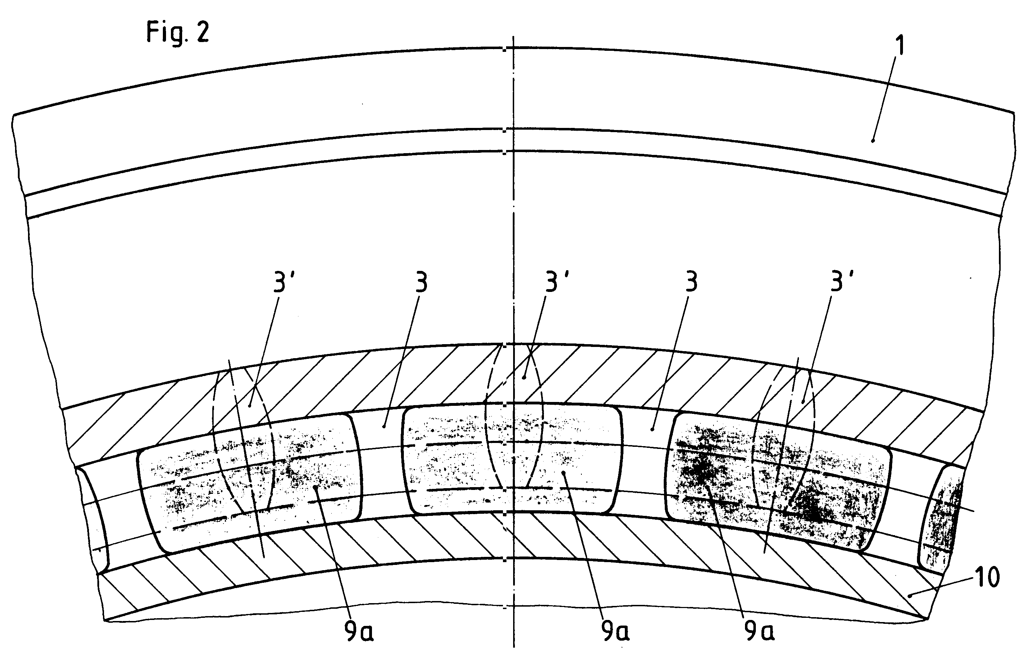

Das in Fig. 1 und Fig. 2 dargestellte Rad weist einen Radreifen 1 auf, der über vorgespannte über den Umfang des Rades verteilt mit Abstand zueinander angeordnete Gummikörper 3 auf einer Radfelge 2 gehalten ist. Die Gummikörper 3 sind dabei in einem von seitlichen Schultern 4 und 5 des Radreifens 1 und von seitlichen Schultern 6 und 7 der Radfelge 2 begrenzten Ringraum eingebettet. Die radäußere Schulter 4 des Radreifens 1 weist einen axial nach außen versetzten und radial zur Felge 2 weisenden und die einen ersten Ansatz bildende Schulter 6 der Radfelge 2 überlappenden zweiten Ansatz 8 auf. Die äußere Radschulter 6 der Radfelge 2 weist einen radial zur Radmitte abgesetzten Ringkragen 10 auf. In den von der Schulter 4, dem Ansatz 8, der Schulter 6 und der Ringkragen 10 gebildeten Ringraum ist ein Gummikörper 9 unter axialer Vorspannung eingepreßt. Diese Vorspannung wird von den Gummikörpern 3 aufgenommen, die dadurch auf axialen Schub beansprucht werden. Dieser Gummikörper 9 besteht aus mehreren mit Abstand zueinander angeordneten weiteren Gummiklötzen 9a, kann aber auch aus einem in sich geschlossenen Gummiring 9b bestehen.

Durch gezielte Wahl des Gummimaterials des Gummikörpers 9,9a,9b sowie durch gezielte Bemessung des Ringraumes ist es möglich, eine gewünschte Vorspannung - insbesondere in axialer Richtung - in die einzelnen Gummiklötze 9a bzw. den in sich geschlossenen Gummiring 9b einzubringen und somit das axiale Federungsverhalten des Rades zu beeinflussen.

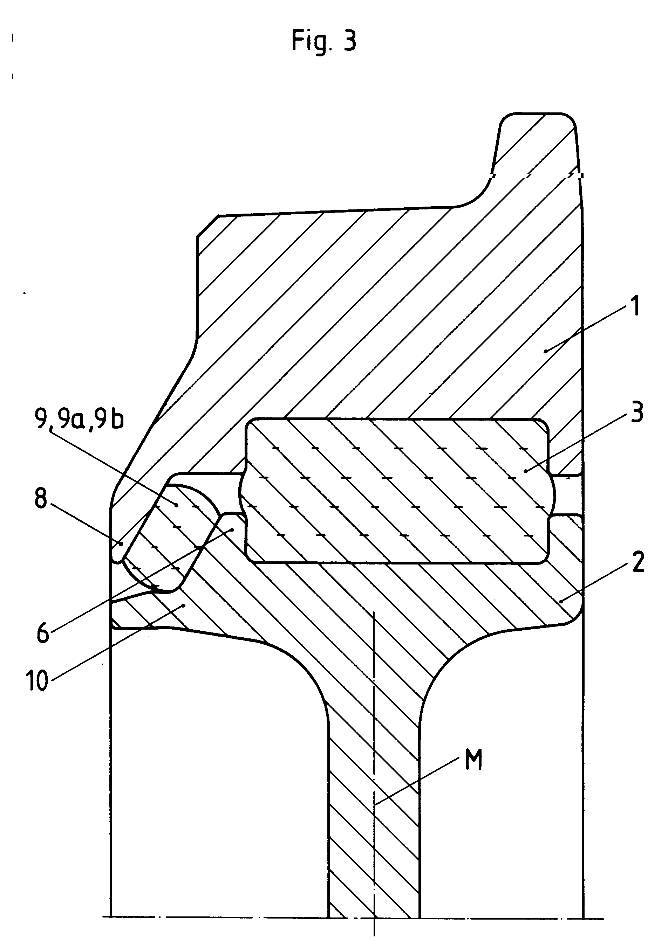

Die Gummiklötze 9a bzw. der Gummiring 9b haben eine axiale Breite, die etwa 1/3 bis 1/10 der axialen Breite der Gummikörper 3 entspricht, jeweils bezogen auf den eingespannten Zustand. Die radiale Dicke der eingespannten Gummiklötze 9a bzw. des Gummiringes 9b entspricht etwa 1/2 bis 1/1 der radialen Dicke der eingespannten Gummikörper 3. Die Länge der Gummiklötze 9a in Radumfangsrichtung entspricht in etwa der Länge der Gummikörper 3. Die Gummiklötze 9a sind dabei so eingebaut, daß sie die Lücken 3' zwischen den Gummikörpern 3 voll überdecken, wie dies in Fig. 2 dargestellt ist. Sie können aber auch so lang sein, daß mehrere Lücken 3' zwischen den Gummikörpern 3 von jeweils einem Gummiklotz 9a überdeckt sind. Gemäß Fig. 1 können die einander zugekehrten Flächen der Schultern 4 und 6 sowie des Ansatzes 8 und des Ringkragens 10 im wesentlichen parallel zueinander und parallel zur Radmittenebene M bzw. quer zur Radmittenebene M verlaufen. Dies ist jedoch für die erfindungegemäße Wirkung des Rades nicht unbedingt erforderlich. So kann zum Beispiel gemäß Fig. 3 vorgesehen sein, die die einzelnen mit Abstand zueinander angeordneten Gummiklötze 9a bzw. den in sich geschlossenen Gummiring 9b stützenden Teil, und zwar den Ansatz 8 und den Ringkragen 10 zusammen mit der Schulter 6 der Radfelge 2 so anzuordnen, daß die Gummiklötze 9a bzw. der Gummiring 9b in einem Winkel zur Axialrichtung des Rades bzw. in einem Winkel zur Radmittenebene M zu liegen kommen.

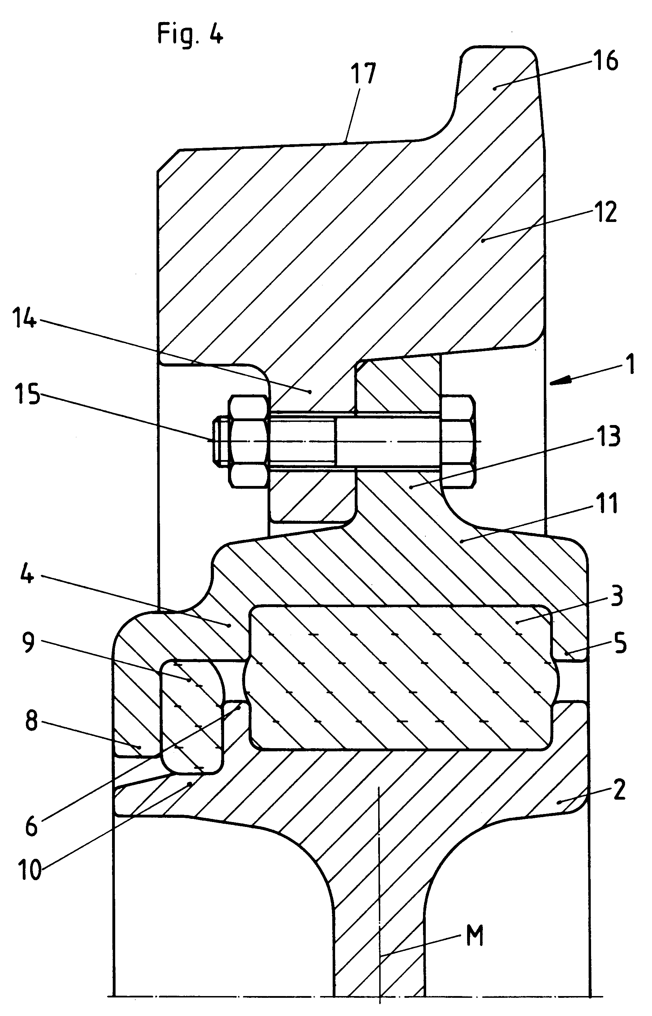

Fig. 4 zeigt eine besondere vorteilhafte Ausführungsform des erfindungsgemäßen Rades. Bei dieser Konstruktion ist der die Gummikörper 3 in der von den seitlichen Schultern 4 und 5 begrenzten Ringnut aufnehmende und den Ansatz 8 tragende innere Teil des insgesamt mit 1 bezeichneten Radreifenkörpers ein separater Ring 11, auf dem ein den Laufkranz 17 und den Spurkranz 16 bildender 12 befestigt ist. Die Befestigung selbst ist als eine Schraubflanschverbindung ausgestaltet. Der innere Ring 11 trägt zur Radmittenebene hin einen radial nach außen weisenden umlaufenden Flansch 13, gegen den der Verschleißreifen 12 mit einem radial nach innen weisenden umlaufenden Flansch 14 über Schraubbolzen 15 verspannbar ist. Diese Konstruktion bietet den Vorteil, daß der Verschleißreifen leicht auswechselbar ist, wobei jedoch die eingangs geschilderten erfindungsgemäßen Vorteile des Rades in bezug auf die Federungseigenschaften in radialer und insbesondere axialer Richtung erhalten bleiben.

**Patentansprüche**

1. Gummigefedertes Schienenrad mit je einer durch seitliche Schultern (4,5,6,7) gebildeten Ringnut des Radreifens (1) und der Radfelge (2) und mehreren in dem von den Ringnuten begrenzten Ringraum mit Abstand zueinander eingebetteten, vorgespannten Gummikörpern (3) und mit an einer Radseite im Bereich der Schultern (4,6) unter Belassung eines Ringspaltes einander überlappenden radialen Ansätzen (6,8), wobei in dem von den Ansätzen (6,8) gebildeten Ringspalt ein unter axialer Vorspannung stehender Gummikörper (9) angeordnet ist,
**dadurch gekennzeichnet,** daß der eine Ansatz (8) von der radäußeren Schulter (4) des Radreifens (1) nach außen versetzt und radial zur Felge (2) weisend die den anderen Ansatz bildende Schulter (6) der Radfelge (2) überlappt, und daß ein axialer Ringkragen (10) radial gegenüber der Schulter (6) zur Radachse hin versetzt angeordnet ist, auf dem der Gummikörper (9) abgestützt ist, dessen axiale Vorspannung im Gleichgewicht mit der axialen Schubspannung in den zwischen dem Radreifen (1) und der Radfelge (2) unter Vorspannung eingebetteten Gummikörpern (3) steht.

2. Schienenrad nach Anspruch 1,
**dadurch gekennzeichnet,** daß die einander überlappenden Ansätze (6,8) an der Radaußenseite vorgesehen sind.

3. Schienenrad nach Anspruch 1 oder 2,
**dadurch gekennzeichnet,** daß der Gummikörper (9) aus mehreren mit Abstand zueinander angeordneten Gummiklötzen (9a) besteht.

4. Schienenrad nach Anspruch 3,
**dadurch gekennzeichnet,** daß die Länge der Gummiklötze (9a) in Radumfangsrichtung in etwa der Lange der zwischen den Radreifen (1) und der Radfelge (2) eingebetteten Gummikörper (3) entspricht.

5. Schienenrad nach Anspruch 3 oder 4,
**dadurch gekennzeichnet,** daß die Gummiklötze (9a) die Lücken (3') zwischen den Gummikörpern (3) überdecken.

6. Schienenrad nach einem der Ansprüche 3 bis 5,
**dadurch gekennzeichnet,** daß die Länge der Gummiklötze (9a) in Radumfangsrichtung so gewählt ist, daß jeweils ein Gummiklotz (9a) mehrere Lücken (3') zwischen den Gummikörpern (3) überdeckt.

7. Schienenrad nach Anspruch 1 oder 2,
**dadurch gekennzeichnet,** daß der Gummikörper (9) aus einem geschlossenen Gummiring (9b) besteht.

8. Schienenrad nach einem der Ansprüche 1 bis 7,
**dadurch gekennzeichnet,** daß die axiale Breite des an einer Radseite eingespannten Gummikörpers (9) etwa 1/3 bis 1/10 der axialen Breite der zwischen dem Radreifen (1) und der Radfelge (2) eingebetteten Gummikörper (3) entspricht.

9. Schienenrad nach Anspruch 8,
**dadurch gekennzeichnet,** daß die radiale Dicke des eingespannten Gummikörpers (9) etwa 1/2 bis 1/1 der radialen Dicke der anderen Gummikörper (3) entspricht.

10. Schienenrad nach einem der Ansprüche 1 bis 9,

**dadurch gekennzeichnet,** daß der die Gummikörper (3) in der von den seitlichen Schultern (4,5) begrenzten Ringnut aufnehmende und den Ansatz (8) aufweisende innere Teil des Radreifenkörpers (1) ein separater Ring (11) ist, auf den ein den Laufkranz (17) und den Spurkranz (16) bildender Verschleißreifen (12) befestigt ist.

11. Schienenrad nach Anspruch 10,
**dadurch gekennzeichnet,** daß der Ring (11) zur Radmittenebene (M) hin einen radial nach außen weisenden umlaufenden Flansch (13) aufweist, gegen den der Verschleißreifen (12) mit einem radial nach innen weisenden umlaufenden Flansch (14) über Schraubverbindungen (15) verspannbar ist.

## Claims

1. A rubber-sprung rail wheel having: an annular groove formed in the wheel tyre (1) by lateral shoulders (4,5) and a lateral groove formed in the wheel rim (2) by lateral shoulders (6,7); a number of prestressed rubber elements (3) embedded spaced out from one another in the annular space bounded by the annular grooves; and radial lips (6,8) overlapping one another, leaving a radial gap, on one side of the wheel in the zone of the shoulders 4,6), an axially prestressed rubber element (9) being disposed in the annular gap formed by the lips (6,8), characterized in that one lip (8), offset outwardly from the shoulder (4) of the wheel tyre (1) on the outside of the wheel and pointing radially towards the wheel rim (2), overlaps the shoulder (6) of the wheel rim (2) which forms the other lip, and disposed radially in relation to the shoulder (6) and offset in the direction of the wheel axis is an axial annular collar (10) against which the rubber element (9) bears, whose axial prestressing in in equilibrium with the axial shearing stress in the rubber elements (3) embedded with prestressing between the wheel tyre (1) and the wheel rim (2).

2. A wheel rail according to claim 1, characterized in that the overlapping lips (6,8) are provided on the outside of the wheel.

3. A wheel rail according to claims 1 or 2, characterized in that the rubber element (9) consists of a number of rubber blocks (9a) disposed spaced out from one another.

4. A wheel rail according to claim 3, characterized in that the length of the rubber blocks (9a) in the direction of the wheel periphery corresponds substantially to the length of the rubber elements (3) embedded between the wheel tyre (1) and the wheel rim (2).

5. A wheel rail according to claims 3 or 4, characterized in that the rubber blocks (9a) cover the gaps (3') between the rubber elements (3).

6. A wheel rail according to one of claims 3 to 5, characterized in that the length of the rubber blocks (9a) in the wheel peripheral direction is so selected that each rubber block (9a) covers a number of gaps (3') between the rubber elements (3).

7. A wheel rail according to claims 1 or 2, characterized in that the rubber element (9) consists of a closed rubber ring (9b).

8. A wheel rail according to one of claims 1 to 7, characterized in that the axial width of the rubber element (9) clamped on one side of the wheel corresponds to substantially 1/3 to 1/10 of the axial width of the rubber elements (3) embedded between the wheel tyre (1) and the wheel rim (2).

9. A wheel rail according to claim 8, characterized in that the radial thickness of the clamped rubber element (9) corresponds to substantially 1/2 to 1/1 of the radial thickness of the other rubber elements (3).

10. A wheel rail according to one of claims 1 to 9, characterized in that the inner portion of the wheel tyre (1) which receives the rubber elements (3) in the annular groove bounded by the lateral shoulders (4,5) and which has the lip (8), is a separate ring (11) to which a wearing tyre (12) forming the tread (17) and the wheel flange (16) is attached.

11. A wheel rail according to claim 10, characterized in that the ring (11) has a circularly extending flange (13) which points radially outwards in the direction of the wheel median plane (M) and against which the wearing ring (12) can be clamped via screw connections (15) by a circularly extending flange (14) pointing radially inwards.

## Revendications

1. Roue ferroviaire amortie par caoutchouc avec chaque fois une rainure annulaire du bandage de roue (1) et de la jante de roue (2) formée par des épaulements latéraux (4, 5, 6, 7) et plusieurs corps en caoutchouc (3) précontraints enrobés à écartement les uns des autres dans le volume annulaire limité par les rainures annulaires et avec des saillies latérales (6, 8) sur un côté de roue se recouvrant les unes les autres dans la région des épaulements (4, 6) en laissant une fente annulaire, un corps en caoutchouc (9) maintenu sous précontrainte axiale étant disposé dans la fente annulaire formée par les saillies (6, 8), caractérisée en ce qu'une des saillies (8) est décalée vers l'extérieur par rapport à l'épaulement (4) externe à la roue du bandage de roue (1) et recouvre, en étant tournée radialement vers la jante (2), l'épaulement (6) de la jante de roue (2) formant l'autre saillie, et qu'une collerette annulaire (10) axiale est disposée décalée radialement par rapport à l'épaulement (6) en direction de l'axe de roue, sur laquelle s'appuie le corps en caoutchouc (9) dont la précontrainte axiale est équilibrée avec la contrainte tangentielle axiale dans les corps en caoutchouc (3) enrobés sous précontrainte entre le bandage de roue (1) et la jante de roue (2).

2. Roue ferroviaire selon la revendication 1, caractérisée en ce que les saillies (6, 8) se recouvrant l'une l'autre sont prévues sur le côté extérieur de la roue.

3. Roue ferroviaire selon la revendication 1 ou 2, caractérisée en ce que le corps en caoutchouc (9) est constitué de plusieurs blocs en caoutchouc (9a) disposés à écartement les uns des autres.

4. Roue ferroviaire selon la revendication 3, caractérisée en ce que la longueur des blocs en caoutchouc (9a) dans la direction périphérique de la roue correspond environ à la longueur des corps en caoutchouc (3) enrobés entre le bandage de roue (1) et la jante de roue (2).

5. Roue ferroviaire selon la revendication 3 ou 4, caractérisée en ce que les blocs en caoutchouc (9a) recouvrent les interstices (3') entre les corps en caoutchouc (3).

6. Roue ferroviaire selon l'une des revendications 3 à 5, caractérisée en ce que la longueur des blocs en caoutchouc (9a) en direction périphérique de la roue est choisie de telle manière qu'un bloc en caoutchouc (9a) recouvre à chaque fois plusieurs interstices (3') entre les corps en caoutchouc (3).

7. Roue ferroviaire selon la revendication 1 ou 2, caractérisée en ce que le corps en caoutchouc (9) est constitué d'une bague en caoutchouc (9b) fermée.

8. Roue ferroviaire selon l'une des revendications 1 à 7, caractérisée en ce que la largeur axiale du corps en caoutchouc (9) encastré sur un côté de roue correspond à environ 1/3 à 1/10 de la largeur axiale des corps en caoutchouc (3) enrobés entre le bandage de roue (1) et la jante de roue (2).

9. Roue ferroviaire selon la revendication 8, caractérisée en ce que l'épaisseur radiale du corps en caoutchouc (9) encastré correspond à environ 1/2 à 1/1 de l'épaisseur radiale des autres corps en caoutchouc (3).

10. Roue ferroviaire selon l'une des revendications 1 à 9, caractérisée en ce que la partie interne du corps de bandage de roue (1) recevant les corps en caoutchouc (3) dans la rainure annulaire limitée par les épaulements latéraux (4, 5) et présentant la saillie (8) est une bague (11) séparée sur laquelle est fixé le bandage d'usure (12) formant la bande de roulement (17) et le boudin (16).

11. Roue ferroviaire selon la revendication 10, caractérisée en ce que la bague (11) présente en direction du plan médian (M) de la roue une flasque (13) rotative tournée vers l'extérieur contre laquelle le bandage d'usure (12) peut être déformé par une flasque (14) rotative tournée radialement vers l'intérieur, par l'intermédiaire de liaisons à vis (15).

Fig. 1

Fig. 2

## Fig. 3

Fig. 4